# EUROPEAN PATENT APPLICATION

(11) **EP 0 533 383 A2**
(43) Date of publication of application: **24.03.1993**
(21) Application number: 92308093.1
(22) Date of filing: 07.09.1992
(51) Int. Cl.: G06K 7/10

(54) **Optical scanner apparatus**

(30) Priority: 19.09.1991 US 762703; 25.09.1991 US 765620
(71) Applicant: NCR INTERNATIONAL INC., Dayton, Ohio 45479 (US)
(72) Inventor: Lindacher, Joseph Michael, Duluth Georgia 30136 (US); Wike, Charles Kenneth, Jr., Sugar Hill, Georgia 30518 (US)
(74) Representative: Robinson, Robert George

(57) **Abstract**

The invention provides for optical scanner apparatus (20, 110) having a rotatable polygon (44, 118) with a plurality of mirror facets (46), and having a curved mirror portion (42, 146-152), a collection mirror member (34) having a pair of reflective surfaces (38,40) and a source (30, 112) of scanning light beams which projects the scanning light beams at one (38) of the reflecting surfaces in the collection mirror (34). By deflecting the scanning light beams off the curved mirror portions (42, 146-152), the mirror facets (46) and the pair of reflective surfaces (38,40), a single line scan pattern composed of a plurality of single line scan lines (60) each located at a different focal plane will be generated to scan a bar code label. By changing the orientation of the mirror facets (46) together with changing the radius curvature of the curved mirror portions (42), an axial invariant bowtie scan pattern (62) composed of multiple scan lines focused at a different focal plane is generated.

## Description

The invention relates to optical scanner apparatus.

In the present-day merchandising point-of-sale operations, data pertaining to the purchase of a merchandise item has been obtained by reading data encoded indicia such as a bar code label printed on or attached to the purchased merchandise item. Scanning systems which have been constructed to read bar code labels include hand-held wands or bar code scanners which are moved across the label and stationary optical scanning systems normally located within the checkout counter in which the coded label is moved across a window in the surface of the counter constituting the scanning area of the counter, which movement is part of the process for loading the item in a baggage cart. In order to standardize the bar codes used in various point-of-sale checkout systems, the grocery industry has adapted a uniform product code (UPC) which is in the form of a bar code. While the previously cited scanning systems work well in scanning a standard size UPC label mounted on a flat surface, where the UPC label is truncated so as to be located on a small merchandise item such as a package of gum or is located on a curved surface, the reading efficiency of the above cited scanning systems becomes unacceptable.

It is therefore an object of this invention to provide optical scanning apparatus that does not exhibit the above disadvantages and which is low in cost.

According to the present invention there is provided optical scanner apparatus comprising light source means, beam reflecting means rotatable in operation and arranged to reflect a light beam from said light source means, characterized in that said beam reflecting means includes a plurality of mirror portions for reflecting said light beam and arranged such that a plurality of scan lines are produced having different depths of focus.

Advantageously, the invention provides for optical scanning apparatus for forming a scan pattern having scan lines of different depth of focus so as to achieve an increased reading efficiency for various sizes and orientations of bar code labels.

The invention is described further hereinafter, by way of example only, with reference to the accompanying drawings in which:-
Fig. 1 is a perspective view bar code scanner apparatus according to one embodiment of the present invention;
Fig. 2 is a partial sectional side view of the bar code scanner apparatus as viewed in direction A of Fig. 1 showing the paths of the scanning light beams as they are projected through the optical members of the scanning system for forming a scan pattern for scanning a bar code label;
Fig. 3 is a plan view of the bar code scanner apparatus of Fig. 1 showing the configuration of the curved mirror portions and the facet mirror portions of the rotating polygon member for generating a single line multi-focal scan pattern;
Fig. 4 is a detailed top view of a second embodiment of a rotating polygon of the apparatus of Fig. 1 showing the configuration of the curved mirror portions and the facet mirrors portions of the polygon member to generate a bow-tie scan pattern;
Fig. 5 illustrates the single line scan pattern generated by the polygon configuration of Fig. 3;
Fig. 6 illustrates the bow-tie scan pattern generated by the polygon configuration of Fig. 4 designating which facet mirror portion of the polygon member generates a scan line of the scan pattern;
Fig. 7 is a block diagram of an optical scanner, including the focus changing apparatus of the present invention;
Fig. 8 is a diagrammatic view of apparatus according to another embodiment of the present invention;
Fig. 9 is a sectional view of the apparatus of Fig. 8 taken along line 3-3;
Fig. 10 is a diagrammatic view of apparatus according to yet another embodiment of the focus present invention; and
Fig. 11 is a sectional view of the apparatus of Fig. 10 taken along line 5-5.

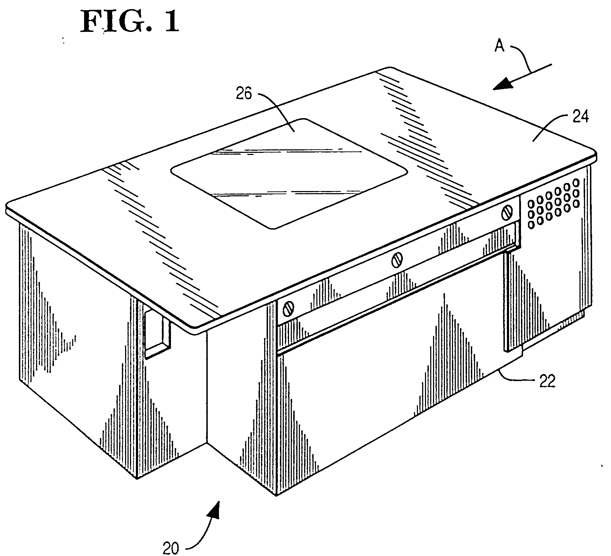

Referring now to Fig. 1, there is shown a perspective view of a compact bar code scanner apparatus (20) embodying the present invention. The scanner 20 comprises a box-like housing member 22 which includes a cover portion 24 having located intermediate its ends a glass covered aperture 26. The housing member 22 is normally mounted within a checkout counter in which the cover portion 24 is aligned with the top supporting surface of the checkout counter. As part of a checkout operation, the operator will move a purchased merchandise item from the supporting surface of the checkout counter past the aperture 26 enabling the bar code label on the item to be scanned by scanning light beams projected through the aperture 26. While the scanning system of the present invention is shown mounted within a checkout counter, it is possible through minature of the optical parts to provide a compact bar code scanning system which may be mounted within a portable hand-held scanner for generating a plurality of scan patterns.

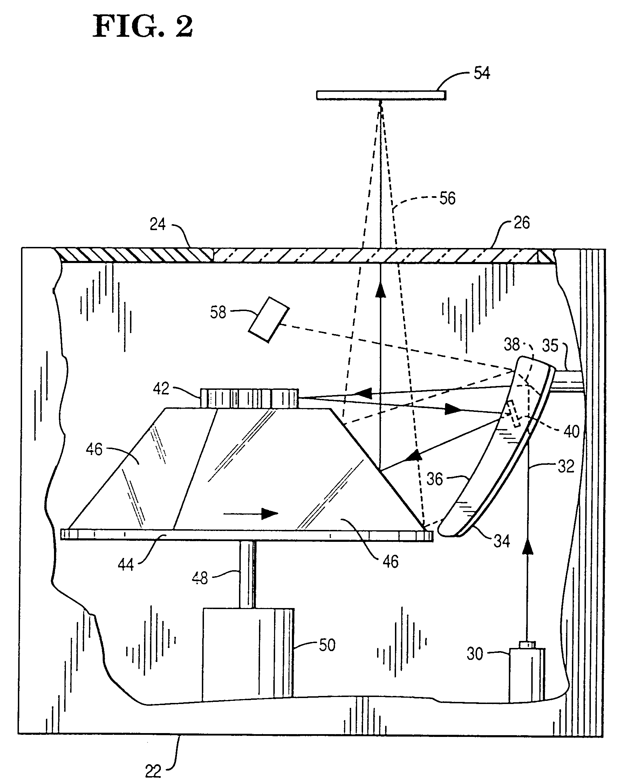

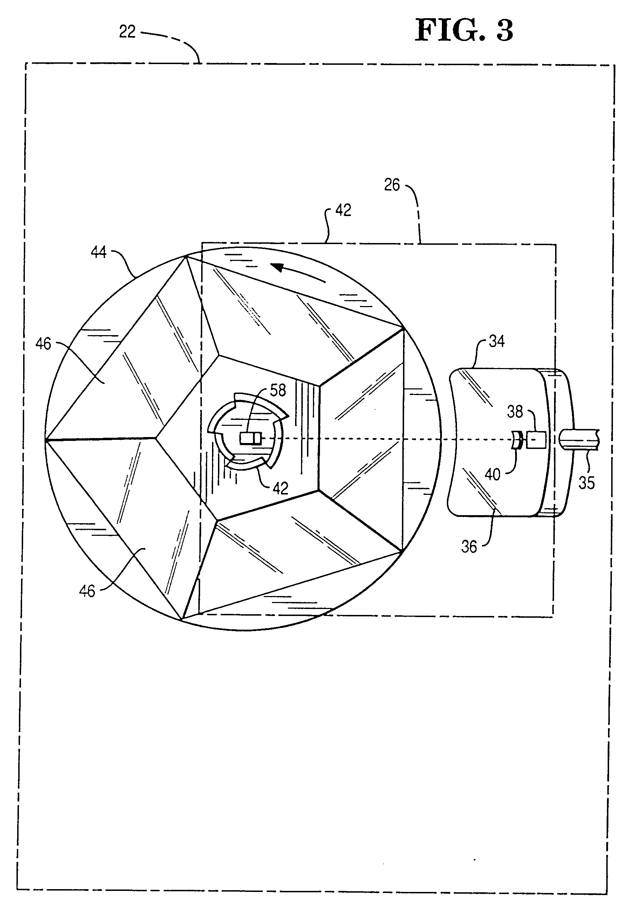

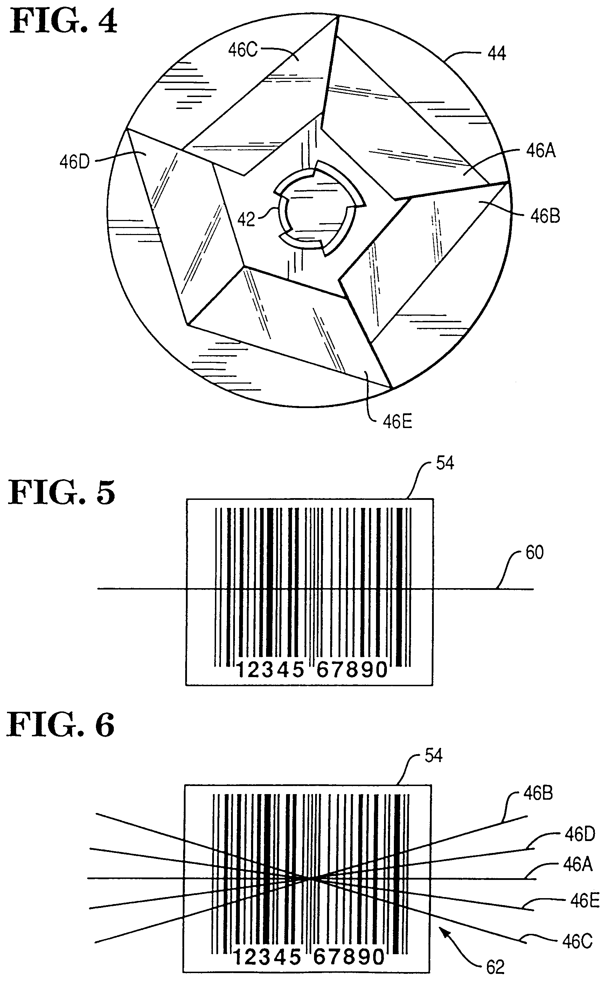

Referring now to Fig. 2, there is shown a partial sectional side view of the housing member 22 showing the arrangement of the optical elements for generating various multi-focal scan patterns. As shown, mounted within the housing member 22 is a laser member 30 projecting a coherent light beam 32 towards an elliptical shaped collection mirror member 34 which includes an elliptical collection surface 36, a flat mirror portion 38 and a cylindrical mirror portion 40 all of which are molded as a portion of the mirror member 34. The light beam 32 will strike the flat mirror portion 38 and be deflected in a generally horizontal direction towards a plurality of five curved mirror facets 42 mounted on top of a rotating polygon member 44 which further includes five angled mirror facets 46 mounted at forty-five degrees to the rotating axis of the polygon member. The distance from the center of each of the mirror facets 46 to the rotating axis of polygon member 44 is the same, which in the present example is one inch (2.25 cm). The polygon member 44 is mounted on the drive shaft 48 of a motor 50 mounted to the floor of the housing member 22. As best shown in Figs. 3 and 4, each curved mirror facet 42 has a different radius of curvature with respect to the center of the polygon member 44 (Fig. 3), enabling each facet to project a scan line at a different focal plane whose depth is determined by the radius of curvature.

The laser light beam 32 reflected off the rotating curved mirror facets 42 in the form of a scan line will be directed at the cylindrical mirror portion 40 of the collection mirror member 34 which focuses the scan line in one axis, redirecting the scan line at the rotating mirror facets 46 of the polygon member 44. Since each mirror facet 46 is mounted at the same angle to the rotating axis of the polygon member 44, each facet will deflect each scan line generated by the curved mirror facets 42 through the glass covered aperture 26 in the form of a single line scan pattern 60 (Fig. 5) towards a bar code label 54 positioned adjacent the aperture 26. The light beams reflected from the scanned bar code label 54 are projected along the dotted line 56 (Fig. 2) towards the mirror facets 46 of the polygon member 44 which reflects the light beams towards the collection surface 36 of the collection mirror member 34. The mirror member 34 will collect and focus the reflected light beams at a detector 58 mounted within the housing member 22. The variation in the position of the curved mirror facets 42 relative to the conjugate flat mirror facets 46 as well as the curvature of the curved mirror facets 42 on the polygon member 44 determines the focal distance for each scan line generated. To vary the depth of focus of each scan line, the radius of curvature of each of the curved mirror facets 42 is different. In the present example, the longest mirror facet 42 has a radius of curvature of one half inch (1.27cm) with each succeeding facet having a radius of curvature which is less than the radius of its adjacent facet by one thirty-second of an inch (0.79 mm). The configuration of the curved mirror facets 42 and the facet portions 46 of the polygon member 44 shown in Figs. 2 and 3 results in the generation of the single line scan pattern 60 (Fig. 4) which is composed of a plurality of single scan lines each generated by one of the curved mirror facets 42 each in a different focal plane.

Referring to Fig. 4, there is shown a second configuration of the curved mirror facets 42 and the mirror facets 46a-46e inclusive in which some of the mirror facets 46 are skewed around a vertical axis extending through the center of the facet for controlling the orientation of the scan lines in the scan pattern. The radius of curvature of each of the curved mirror facets 42 is the same as that shown in Fig. 3 but can be changed to vary the depth of focus of the scan lines. This configuration will result in the generation of the bow-tie scan pattern 62 (Fig. 6) in which each of the scan lines 46 will be in a different focal plane. As shown in Figs 4 and 6, the mirror facet 46a (Fig. 4) will generate the horizontal scan line 46a (Fig. 6). In similar manner, mirror facets 46c and 46d, which are skewed 5 degrees about a vertical axis, generate the scan lines 46c and 46d. The mirror facets 46b and 46e, which are skewed ten degrees about a vertical axis, generate the scan lines 46b and 46e respectively. The number of scan lines 64 that comprise the scan pattern 62 is determined by the number of curved mirror facets 42 and mirror facets 46 employed. It will be seen that by this construction, different types of multi-focal scan patterns can be generated which will be able to read different size bar code labels. The polygon member 44 performs three functions, namely changing the focus of the scan lines, generating a scan pattern and collecting the light reflected from the scanned bar code label, and this simplifies alignment of the optical elements by eliminating degrees of freedom for each element.

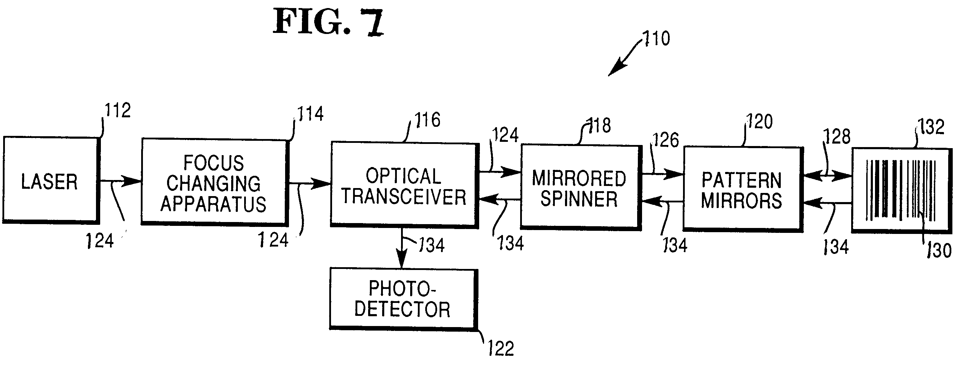

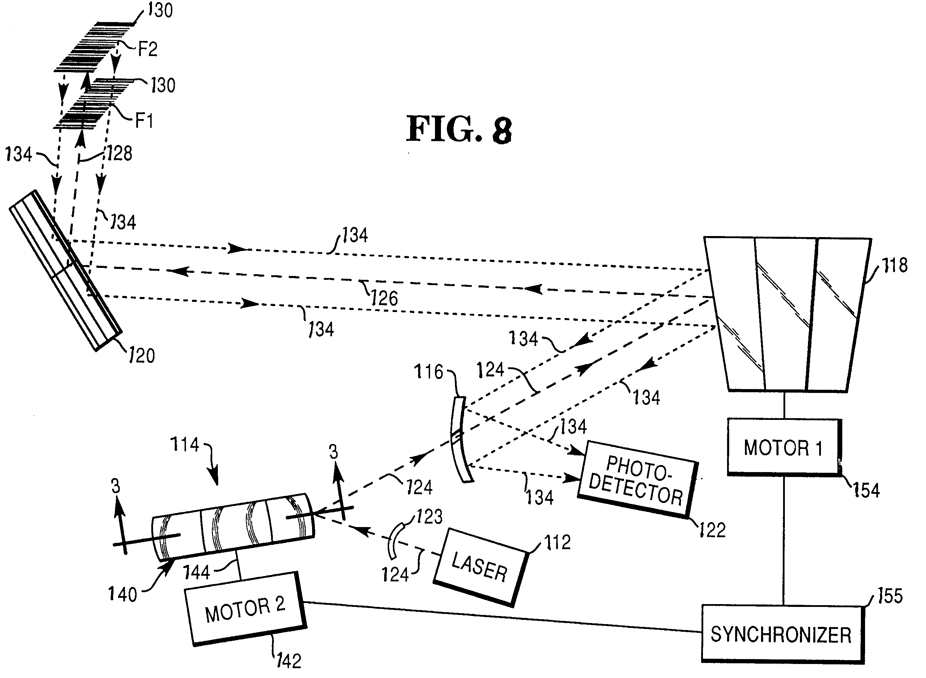

Referring now to Fig. 7, optical scanner 110 includes laser 112, focus variation apparatus 114 optical transceiver 116, mirrored spinner 118, pattern mirrors 120, and photodetector 122. Laser 112 includes a laser diode, a focusing lens 123 (Fig. 8) for producing a predetermined focal point or plane, and a collimating aperture, and produces laser beam 124.

Beam 124 contacts focus changing apparatus 114, which alters the focal plane of beam 124 in a cyclical fashion, and then passes through optical transceiver 116. Optical transceiver 116 typically includes a collecting surface having an aperture therethrough for passing beam 124. Beam 124 contacts mirrored spinner 118 which produces scanning beams 126 as it rotates. Scanning beams 126 reflect off of pattern mirrors 120 to form scan lines 128, which together form a scan pattern. Scan lines 128 travel towards bar code label 130 of article 132.

Pattern mirrors 120 direct reflected light 134 from bar code label 130 towards mirrored spinner 118, which further directs reflected light 134 towards optical transceiver 116. Optical transceiver 116 focuses reflected light 134 at photodetector 122, which generates electrical signals representing the intensity of reflected light 134.

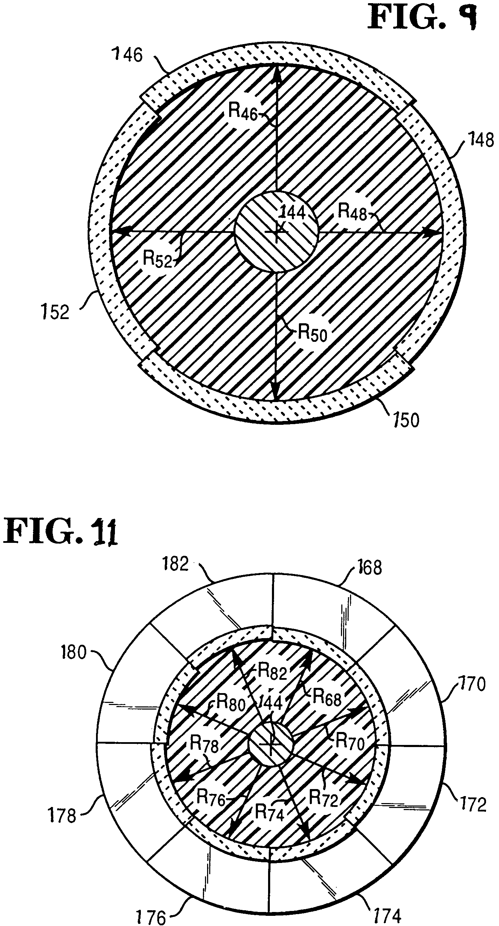

Turning now to Figs. 8 and 9, another embodiment of focus changing apparatus 114 of the present invention is illustrated and includes a ring 140 of spherical segments and motor 142 for rotating ring 140. The segments of ring 140 have predetermined radii of curvature and are located at their respective radii of curvature from a common axis 144.

Preferably, focus changing apparatus 114 includes four segments 146-152 (Fig. 9) for ease of manufacture. Preferably, apparatus 114 is injection molded to optical tolerances. Segments 146-152 have radii R46-R52. Preferably, radii R46 equals R50 and R48 equals R52. The speed of motor 142 is preferably 1500 rpm.

The present invention can also be provided with any number of segments having different radii of curvature, and also with a continuous surface of varying radius instead of separate segments.

Focus changing apparatus 114 additionally shares focusing lens 123 with laser 112.

In operation, focus changing apparatus 114 varies the focal planes of scan lines 128. Focusing lens 123 provides power compensation for any larger than desired focus change by spherical segments 146-152. Scan lines 128 focus at two planes F1 and F2. The speed of motor 154 is preferably 6000 rpm. Since the speed of motor 142 is less than the speed of spinner motor 154, scan lines 128 raster between focal planes F1 and F2. Preferably, F1 and F2 are located 120 and 130 inches (50.8 cm and 76.2 cm) above the scanner 110, respectively.

Proper selection of the number of mirrored spinner facets and the speed ratio of motor 142 to motor 154 results in a scan pattern having scan lines 128 having minimal breaks. For purposes of illustration, mirrored spinner 118 includes eight facets and the speed ratio of motor 154 to motor 142 is 4:1. Therefore, motor 154 completes one revolution for every fourth of a revolution of motor 142. Motors 154 and 142 are digitally synchronized by synchronizer 155 by known methods. Each revolution of motor 154 produces a complete scan pattern at either focal plane F1 or F2.

Advantageously, focus changing apparatus 114 improves scanner efficiency by increasing pattern depth while collecting reflected light and focusing it to a fixed photodetector position.

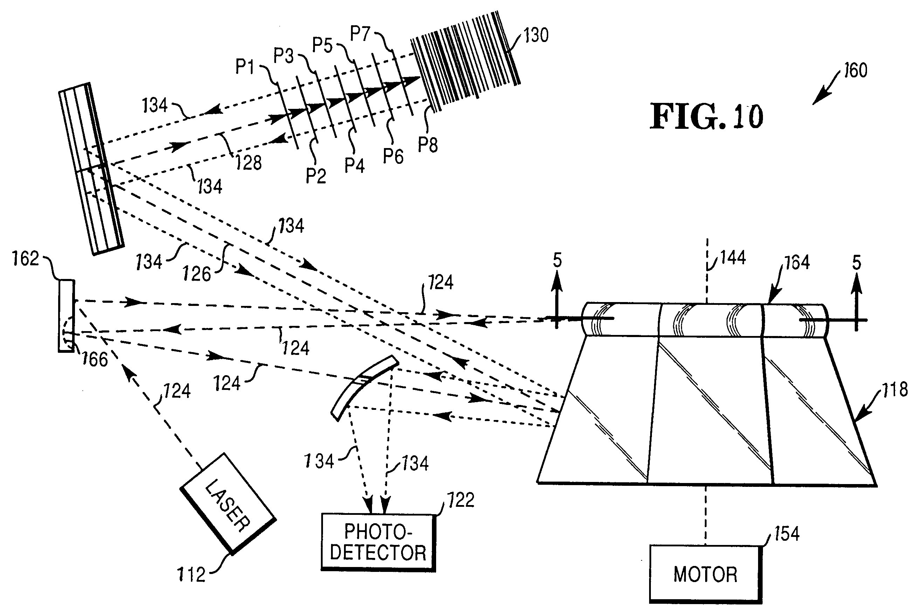

Turning now to Figs. 10 and 11, yet another embodiment 160 of focus changing apparatus 114 of the present invention is shown which includes deflector mirror 162, ring 164 of spherical mirror segments, and spherical mirror 166. Deflector mirror 162 reflects beam 124 towards the spherical mirror segments of ring 164 and provides a clear path for spherical mirror 166 to receive the return reflection.

The spherical mirror segments of ring 164 serve to change the power of incident beam 124 and are mounted on mirrored spinner 118 at distances from the spinner axis 144 equal to the radii of the segments. The speed of motor 154 is preferably 6000 rpm. Preferably, each spherical mirror segment has a different radius so as to produce a scan pattern having multiple focal planes and aligns with and mounts above a spinner facet. Advantageously, focus changing apparatus 160 requires only one motor 154.

Spherical mirror 166 compensates for the excess power within beam 124 after reflection from spherical mirror segments of ring 164. Preferably, spherical mirror 166 is concave and located adjacent deflector mirror 162 due to the large angle of incidence presented by spherical mirror segments of ring 164. Preferably, spherical mirror 166 has a radius of .76 inches (1.93 cm), although the choice of radius depends on the specific desired application.

Preferably, focus changing apparatus 160 includes eight spherical mirror segments 168-182 (Fig. 11) having radii R68-R82. Preferably, radii R68-R82 are .75 in. (1.90 cm). Advantageously, deflector mirror 162, spherical mirror segments 164, and spherical mirror 166 may all be made from molded plastic.

In operation, focus changing apparatus 160 produces a scan pattern made up of scan lines having different focal points. The eight focal planes P1-P8 corresponding to spherical mirror segments 168-182 can be chosen to meet a specific application.

Advantageously, focus changing apparatus 160 acts as a "front end" that will produce multiple scan lines 128 having different focal planes. Its components may be easily molded in plastic. It is modular in design and can easily be adapted to existing optical scanners, or can provide the front end for a new scanner. The design of the pattern generating optics is not affected by the front end and can be implemented separately whenever the pattern requirement is known.

## Claims

1. Optical scanner apparatus (20, 110) comprising light source means (30, 112), and beam reflecting means (42, 140) rotatable in operation and arranged to reflect a light beam from said light source means (30, 112), characterized in that said beam reflecting means (42, 140) includes a plurality of mirror portions (42, 146-152) for reflecting said light beam and arranged such that a plurality of scan lines are produced having different depths of focus.

2. Apparatus according to claim 1, characterized in that said plurality of mirror portions (42, 146-152) comprise a plurality of curved mirror members.

3. Apparatus according to claim 2, characterized in that said plurality of curved mirror members (42, 146-152) have a common centre of curvature and are spaced at different distances from said centre of curvature.

4. Apparatus according to claim 1, 2 or 3, characterized in that said beam reflecting means (42, 140) is arranged to receive and deflect light beams reflected from said label and light collection means (36, 160) is provided for collecting the light beams from said label and deflected by said beam reflecting means (42, 140) for focussing the light beams on a detector member (58, 120) for generating electrical signals representing the coded data scanned on said bar code label.

5. Apparatus according to claim 4, characterized in that first (38) and second (40) deflecting means are mounted on said light collection means (36).

6. Apparatus according to claim 5, characterized in that said collection means (36) comprises a collection mirror member.

7. Apparatus according to claim 5, characterized in that said collection means (36) comprises a lens member.

8. Apparatus according to any one of the preceding claims, characterized in that said beam reflecting means (42, 140) also includes a polygon member (44, 118) rotatable in operation and having a plurality of reflective facet members (46), each facet member (46) being mounted at the same radial distance from the center of rotation of said polygon member (44, 118).

9. Apparatus according to claim 8, characterized in that said facet members (46) of said polygon member (44) do not all intersect at the same angle.

10. Apparatus according to claim 8 or 9, characterized in that said plurality of mirror portions (42, 146-152) one provided on said polygon member (44, 118) for rotation therewith.
